(19) Europäisches Patentamt
European Patent Office
Office européen des brevets

(11) EP 0 441 730 B2

(12) **NOUVEAU FASCICULE DE BREVET EUROPEEN**

(45) Date de publication et mention de la décision concernant l'opposition:
**01.09.1999 Bulletin 1999/35**

(45) Mention de la délivrance du brevet:
**22.11.1995 Bulletin 1995/47**

(21) Numéro de dépôt: **91460001.0**

(22) Date de dépôt: **05.02.1991**

(51) Int Cl.⁶: **H04L 5/06**

(54) **Procédé de diffusion de données à entrelacement temps-fréquence utilisant des signaux de référence de fréquence**

Verfahren zur Datenverbreitung mit Zeit-Frequenzverschachtelung mit Verwendung von Bezugsfrequenzsignalen

Method of data broadcasting with time-frequency interleaving, using frequency reference signals

(84) Etats contractants désignés:
**DE GB**

(30) Priorité: **06.02.1990 FR 9001492**

(43) Date de publication de la demande:
**14.08.1991 Bulletin 1991/33**

(73) Titulaires:
- **FRANCE TELECOM**
  **75015 Paris (FR)**
- **TELEDIFFUSION DE FRANCE SA**
  **75932 Paris Cédex 15 (FR)**

(72) Inventeurs:
- **Le Floch, Bernard**
  **F-35000 Rennes (FR)**
- **Rault, Jean-Christophe**
  **F-35700 Rennes (FR)**
- **Pommier, Daniel**
  **F-35130 Breal-sous-Montfort (FR)**
- **Castelain, Damien**
  **17 square Alain Fergent, F-35000 Rennes (FR)**

(74) Mandataire: **Corlau, Vincent**
**c/o Cabinet Vidon,**
**Immeuble Germanium,**
**80 avenue des Buttes de Coesmes**
**35700 Rennes (FR)**

(56) Documents cités:
EP-A- 0 008 521          GB-A- 2 206 768

- **IEE PROCEEDINGS I. SOLID- STATE & ELECTRON DEVICES. vol.136, no. 1, février 1989, STEVENAGE GB pages 11 - 19; J. Pennington: "Techniques for Medium-speed Data Transmission over HF Channels"**
- **EBU REVIEW- TECHNICAL. no. 224, août 1987, BRUSSELS BE pages 168 - 190; R.Lassalle, M. Alard: "Principles of Modulation and Channel Coding for digital Broadcasting for Mobile Receivers"**
- **EUROCON 88, 8th European Conference on Electrotechnics, June 13-17 1988; Alard M. et al.: "A new system of sound broadcasting to mobile receivers" - pages 416-420**

## Description

Le domaine de l'invention est celui de la diffusion de signaux numériques dans des canaux affectés de trajets multiples dont les caractéristiques varient dans le temps.

L'invention concerne notamment la diffusion de données numériques destinées à être reçues notamment par des mobiles circulant en milieu urbain, c'est-à-dire, en présence de parasites et de brouillage et dans des conditions de multipropagation (processus de Rayleigh) engendrant des phénomènes d'évanouissement (fading).

L'invention s'applique plus particulièrement, mais non exclusivement, au système de radiodiffusion sonore numérique dénommé système COFDM (Coded Orthogonal Frequency Division Multiplex (Multiplexage de Fréquences Orthogonales Codées)), tel que décrit dans les demandes de brevets françaises 86 09622 du 2 juillet 86 (FR-A-2601210), et 86 13271 du 23 septembre 86 (FR-A-2604316) au nom des mêmes déposants. (voir aussi le document EBU REVIEW-TECHNICAL, no. 224).

Ce système de diffusion numérique est basé sur l'utilisation conjointe d'un dispositif de codage de canal et d'un procédé de modulation par multiplexage de fréquences orthogonales.

Le processus de codage connu a notamment pour but d'absorber l'effet des variations d'amplitude du signal reçu, dues au processus de Rayleigh, par un traitement adéquat des échantillons issus du démodulateur. De façon préférentielle, on utilise un codage convolutif, éventuellement concaténé à un codage du type Reed-Solomon.

Le décodage peut être avantageusement un décodage de Viterbi à décision douce.

Le procédé de modulation proprement dit de ce système connu permet de s'affranchir des problèmes liés à la sélectivité en fréquence du canal. Il consiste à assurer la répartition d'éléments numériques constitutifs du signal de données dans l'espace fréquence f-temps t, et à émettre simultanément des jeux d'éléments numériques sur N voies de diffusion parallèles au moyen d'un multiplex de fréquences utilisant des porteuses orthogonales.

De façon connue, les éléments numériques codés sont de plus entrelacés, en temps et en fréquence, de façon à maximiser l'indépendance statistique des échantillons vis-à-vis du processus de Rayleigh et du caractère sélectif du canal.

En particulier, cela permet d'éviter que deux éléments successifs du train de données soient émis à la même fréquence.

La nature bidimensionnelle du signal émis nécessite, au niveau du récepteur, la mise en oeuvre d'un échantillonnage selon les deux axes temporel et fréquentiel. La détermination des instants d'échantillonnage dans le temps est le résultat de la synchronisation temporelle du récepteur. L'échantillonnage en fréquence découle de l'application d'une transformée de Fourier discrète (TFD) sur les échantillons temporels.

Cette transformée est équivalente à un banc de filtres orthogonaux, dont la position dans le domaine des fréquences est déterminée par la fréquence de l'oscillateur local. La précision de l'échantillonnage en fréquence dépend donc de l'écart de fréquence entre le signal émis et cet oscillateur local.

L'opération connue qui consiste à ajuster dans le récepteur la fréquence de l'oscillateur local s'appelle la commande automatique de fréquence (CAF). Une méthode d'application du CAF est par exemple décrite dans : "A new system of sound broadcasting to mobile receivers" ("Un nouveau système de diffusion de sons vers des récepteurs mobiles") (M.Alard, R.Halbert, B.Le Floch, D.Pommier; Conférence Eurocon 88).

Un décalage en fréquence du banc de filtres réalisé par la transformée de Fourier a deux effets distincts sur la démodulation d'une porteuse particulière d'un signal COFDM. Premièrement, l'écart entre la fréquence du signal émis et la fréquence de l'oscillateur local introduit une erreur de phase. D'autre part, cet écart introduit, après transformée de Fourier, un bruit dû à la perte de l'orthogonalité entre les fréquences porteuses, traduisant l'interférence intersymboles dans le domaine des fréquences.

Suivant la précision des oscillateurs, le CAF peut ne pas être suffisant pour assurer un bon accrochage. Ainsi, dans le cas d'un système COFDM où l'écart entre porteuses est de 10 kHz et la fréquence porteuse de 1 GHz, une précision de $10^{-5}$ de l'oscillateur local peut provoquer un décalage d'une porteuse dans le démodulateur, rendant impossible toute interprétation du signal reçu.

L'invention a pour objectif de pallier ces inconvénients.

Plus précisément, l'invention a pour objectif de fournir un procédé de diffusion numérique à entrelacement temps-fréquence dans lequel l'acquisition de la commande automatique de fréquence est facilitée.

Ceci permet notamment de recourir, dans le récepteur, à l'utilisation d'un oscillateur local de précision classique.

Un objectif particulier de l'invention est de combattre d'une part le problème de rotation de phase due au décalage de fréquences, et d'autre part, le problème spécifique au signal COFDM de perte d'orthogonalité entre les porteuses.

L'invention a également pour objectif de fournir un procédé compatible avec la structure du signal COFDM, et exploitant des opérateurs déjà mis en oeuvre dans le récepteur pour réaliser d'autres fonctions.

Ces objectifs, ainsi que d'autres qui apparaîtront par la suite, sont atteints selon l'invention par un procédé de diffusion de données numériques selon la revendication 1.

Ce procédé est une transposition inventive dans le domaine des fréquences de procédés connus d'insertion de mots de synchronisation temporelle dans les systèmes de diffusion unidimensionnels.

Avantageusement, les mots de synchronisation fréquentielle de l'invention prennent en compte, et utilisent, les diverses caractéristiques d'un signal à entrelacement temps-fréquence, notamment du type COFDM.

Ainsi, dans le cas où chacune desdites trames comprend un symbole de silence de synchronisation analogique, ledit symbole de silence comporte avantageusement au moins une porteuse de référence, constituant ledit motif de synchronisation fréquentielle.

Ces porteuses de référence ne perturbent pas le fonctionnement de la synchronisation analogique, si elles sont suffisamment peu nombreuses.

Dans un mode de réalisation particulier de l'invention, ces porteuses de référence sont modulées par certains desdits éléments numériques.

Dans un autre mode de réalisation, ces porteuses de référence ne sont pas modulées, et leur phase à l'origine est choisie de façon que l'enveloppe résultante dudit motif de synchronisation fréquentielle soit sensiblement constante.

Ceci peut notamment être obtenu en choisissant ces phases à l'origine de façon qu'elles suivent une loi de distribution quadratique.

L'utilisation d'une fenêtre d'enveloppe constante permet de s'assurer d'un bon fonctionnement de la synchronisation analogique.

Le motif de synchronisation fréquentielle peut également être constitué par la suppression d'au moins une desdites fréquences porteuses, dans au moins un desdits symboles.

Un autre mode de réalisation préférentiel de l'invention est l'utilisation d'un mot de service, connu du récepteur, modulant au moins une fréquence porteuse choisie dans le domaine fréquentiel, dans au moins certains symboles de ladite trame.

Lesdits mots de service sont avantageusement insérés au signal à la fréquence symbole, ou à une fréquence plus faible.

De façon avantageuse, dans les différents modes de réalisation, l'écart entre les éléments constituant un motif de synchronisation est non constant, pour éviter une perte totale de ce motif dans le cas d'un écho simple.

Dans un mode de réalisation préférentiel de l'invention, ledit motif de synchronisation est constitué d'une combinaison d'au moins deux modes de réalisations précédemment décrit.

L'invention concerne également les récepteurs capables de recevoir et d'analyser les signaux produits par un tel procédé.

Avantageusement, ces récepteurs comprennent des moyens de localisation desdits motifs de synchronisation fréquentielle, et des moyens d'ajustement de l'oscillateur local, en fonction de ladite localisation.

Lesdits moyens d'ajustement de l'oscillateur peuvent notamment ajuster ledit oscillateur local soit sur la fréquence du signal émis, soit de façon à accrocher le peigne de fréquence le plus proche de la fréquence d'oscillation dudit oscillateur local.

De façon préférentielle, lesdits moyens d'ajustement de l'oscillateur local coopèrent avec des moyens de prise en compte de plusieurs résultats de localisation de motifs de synchronisation.

D'autres caractéristiques et avantages de l'invention apparaîtront à la lecture de la description suivante d'un mode de réalisation préférentiel de l'invention, donné à titre d'exemple illustratif et non limitatif, et des dessins annexés, dans lesquels :

- La figure 1 est un schéma synoptique d'une chaîne d'émission-réception mettant en oeuvre le procédé de l'invention ;
- La figure 2 illustre le positionnement des porteuses reçues par rapport à la réponse en fréquence de la transformée de Fourier dans un récepteur de type connu, dans le cas d'accords parfait et imparfait de l'oscillateur local ;
- La figure 3 présente le résultat de la transformée de Fourier d'une fréquence porteuse de référence selon le premier type de motif de synchronisation fréquentielle selon l'invention, dans le cas d'accords parfait et imparfait ;
- La figure 4 présente le résultat de la transformée de Fourier d'un motif de synchronisation à suppression de porteuses dans les cas d'accords parfait et imparfait ;
- La figure 5 est un schéma synoptique d'un récepteur selon l'invention, utilisant les trois types de motif de synchronisation fréquentielle.

Les différents aspects du mode de réalisation qui va être décrit ci-après concernent plus particulièrement la radiodiffusion sonore numérique vers des mobiles.

Toutefois, il est clair que le principe de diffusion numérique à haut débit de l'invention peut s'appliquer à tout type de communication, notamment dans des canaux soumis au processus de Rayleigh.

Dans l'application de radiodiffusion sonore numérique, un objectif peut être par exemple de transmettre seize programmes stéréophoniques dans une bande de fréquence de 8 MHz de largeur, avec un débit numérique de l'ordre de 250 kbitslseconde après compression par programme stéréophonique.

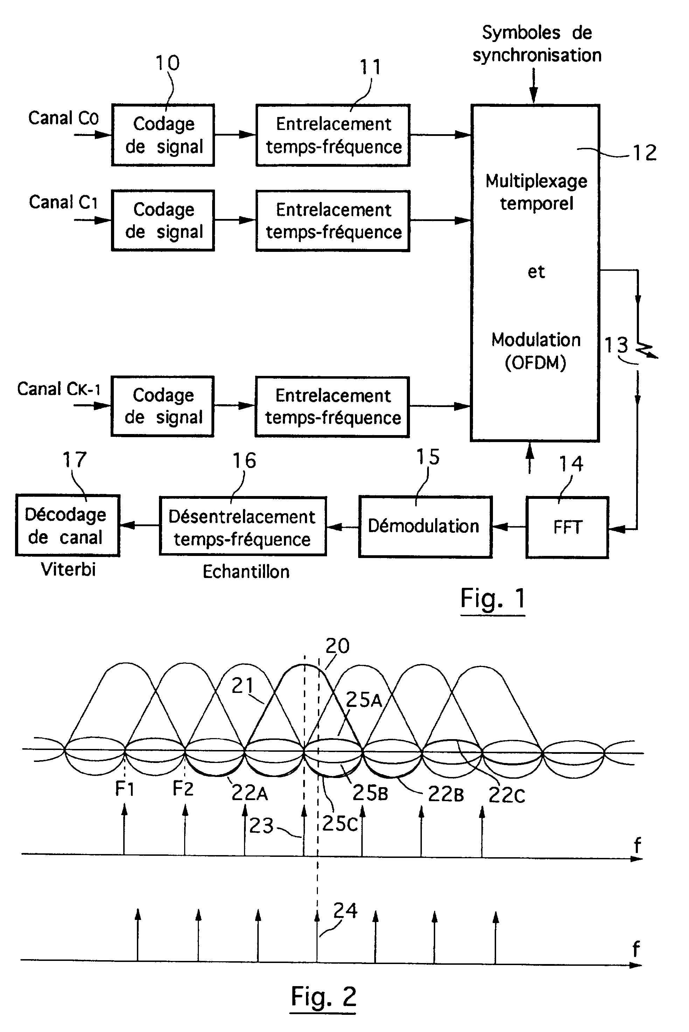

Une chaîne de transmission telle que décrite dans les demandes de brevet mentionnées en préambule est présentée en figure 1.

Chacun des K (16) canaux $C_0$ à $C_{K-1}$ subit en parallèle un codage 10, puis un entrelacement temps-fréquence 11 sur une voie séparée, avant d'être soumis collectivement à un processus 12 de multiplexage temporel et de modulation OFDM.

Le codage 10 est avantageusement du type convolutif. L'entrelacement temps-fréquence 11 a pour objectif de brasser les éléments numériques de chaque canal afin de leur conférer une indépendance maximale vis-à-vis des parasites, du brouillage et des évanouissements du canal de diffusion 13.

La modulation OFDM, consiste à moduler des symboles constitués chacun d'un multiplex de fréquences orthogonales diffusées simultanément sur N voies. Cette opération peut être réalisée par une transformation de Fourier sur la séquence numérique codée et entrelacée de chaque canal $C_i$.

A titre d'exemple, dans une bande de fréquence de 8 MHz, on peut définir 512 fréquences porteuses séparées de 15 625 Hz. Parmi celles-ci 448 sont utilisées, après élimination de la fréquence centrale du spectre et des porteuses latérales (1/8e du spectre) pour tenir compte des contraintes de filtrage.

La chaîne de réception comporte les étapes classiques de filtrage et de transposition en bande de base 14, de démodulation 15, de désentrelacement temps - fréquence 16 et de décodage 17 du canal désentrelacé.

Dans l'hypothèse d'un multiplexage en fréquence des différents canaux, l'opération 14 de sélection de canal s'effectue avantageusement par transformation de Fourier rapide TFR de façon à décimer le jeu de porteuses adéquatement multiplexées pour n'appliquer l'opération de démodulation COFDM que sur les porteuses du canal sélectionné (voir certificat d'addition 86 13271 déjà cité (FR-A-2640316)).

Dans l'hypothèse d'un multiplexage en temps des différents canaux, l'opération 14 est constituée par un fenêtrage sur les symboles du canal faisant l'objet du décodage, suivi d'une transformée de Fourier appliquée à chacun desdits symboles.

Après le désentrelacement temps-fréquence 16, on applique avantageusement un décodage de Viterbi à décision douce 17.

Le signal émis est constitué par une suite de symboles de modulation formant un multiplex de N porteuses orthogonales.

Soit $\{f_k\}$ l'ensemble des fréquences porteuses considérées, avec:

$$f_k = f_0 + k/t_s, k = 0 \text{ à } N - 1$$

où $t_s$ représente la durée allouée à un symbole de modulation.

On peut alors définir la base de signaux élémentaires suivante :
$\Psi_{j,k}(t)$ avec k = 0 à N-1, j = -∞ à + ∞:
$\Psi_{j,k}(t) = g_k (t - jT_s)$
avec:
$0 \leq t < T_s$     :$g_k(t) = e^{2i\pi fkt}$
ailleurs     :$g_k (t) = 0$

Soit d'autre part un ensemble de nombres complexes $\{C_{j,k}\}$ prenant ses valeurs dans un alphabet fini, représentant le signal de données émis.

Le signal COFDM associé s'écrit alors :

$$x(t) = \text{Re} \left( \sum_{j=-\infty}^{+\infty} \sum_{k=0}^{N-1} C_{j,k} \ \psi_{j,k}(t) \right)$$

Dans le cas qui concerne cette application, les symboles émis $C_{j,k}$ sont de module constant, ce qui signifie en d'autres termes, que chacune des porteuses du multiplex subit une modulation de phase.

Pour s'affranchir de tout problème de sélectivité en fréquence du canal, un intervalle de garde de durée $\Delta$ est inséré devant la partie utile de chaque symbole, afin d'absorber le brouillage intersymboles.

$t_s$ représente donc la durée du signal utile, $\Delta$ la durée de l'intervalle de garde et $T_s = t_s + \Delta$, la durée du symbole.

La figure 2 présente la position du peigne de porteuses reçu par rapport à la réponse en fréquence du banc de filtres réalisé par la transformée de Fourier, dans le cas d'un accord parfait de l'oscillateur local, puis d'un accord imparfait.

La réponse en fréquence 20 de chacun des filtres comprend un lobe principal 21, qui est la partie utile du filtre, et des lobes secondaires, $22_A$, $22_B$, $22_C$ créant une interférence interporteuse qui s'annule aux fréquences $F_1$, $F_2$,... correspondant au maximum du lobe principal de chaque filtre.

Lorsque l'accord est parfait, chacune des porteuses 23 est filtrée par un seul filtre 20. En revanche, lorsque cet accord est imparfait, il apparaît un écart de fréquence $\delta f$, provoquant, lors du filtrage d'une porteuse 24, un bruit d'interférence interporteuse dans le domaine fréquentiel, dû aux lobes secondaires $25_A$, $25_B$, $25_C$...

D'autre part, le résultat du filtrage est atténué, la porteuse 24 ne coïncidant plus avec le maximum du lobe principal 21. Cet écart de fréquence ajoute à la phase nominale fixée par la modulation un terme d'erreur $\Delta\varphi = 2\pi\delta fT_s$, l'observation se faisant sur la durée $T_s$ d'un symbole.

De manière classique, le CAF est mis en oeuvre en effectuant dans le plan complexe une mise à la puissance $2^P$ des symboles démodulés, P étant le nombre d'états de phase de la modulation. Le résultat de cette opération ne dépend plus de l'information modulante, toutes les valeurs étant ramenées sur l'axe réel, et donne une mesure de l'écart de fréquence $\delta f$, dont on tient compte pour l'ajustement de la fréquence de l'oscillateur local.

Dans le cas du signal COFDM, cette mesure doit être intégrée sur les deux axes temps et fréquence, afin d'éliminer au mieux le bruit de perte d'orthogonalité et le bruit ramené par le canal de transmission et le récepteur.

Suivant la précision des oscillateurs, ce procédé peut ne pas être suffisant pour assurer un bon accrochage. Si l'on considère par exemple un système COFDM où l'écart entre porteuses est de 10 KHz et où la fréquence porteuse est de 1 GHz, une précision de $10^{-5}$ de l'oscillateur local peut provoquer un décalage d'une porteuse dans le démodulateur, que la boucle décrite précédemment ne peut évidemment pas gérer.

L'invention concerne un procédé avantageux d'aide à l'acquisition du CAF, exploitant la structure du signal COFDM. Ce procédé consiste à insérer un motif de synchronisation fréquentielle dans le signal émis.

Cette approche est une transposition inventive dans le domaine fréquentiel des méthodes connues d'insertion des mots de synchronisation temporelle dans les systèmes de transmission unidimensionnels.

L'invention concerne notamment trois moyens de mettre en oeuvre ce procédé, qui peuvent être utilisés seul, ou selon toutes les combinaisons possibles.

Le premier moyen de réaliser un motif de synchronisation fréquentielle s'applique aux procédés de diffusion comportant un intervalle de silence en début de chaque trame, permettant une synchronisation analogique. Un tel procédé est décrit dans la demande de brevet FR 88 15216 du 18.11.88 (FR-A-2639495), au nom des mêmes déposants.

Ce symbole de silence a une double objectif: il permet la synchronisation du récepteur en temps, et la mesure des bruits et brouilleurs du canal. Il est cependant possible d'insérer un petit nombre de porteuses pilotes, ou porteuses de référence dans ce symbole de silence, sans en modifier les fonctionnalités.

Ainsi, pour un signal COFDM constitué de N porteuses, on insère M porteuses de référence, M étant très inférieur à N, par exemple M = N/16.

Dans ce cas, l'enveloppe du symbole "nul" reste très faible, et donc aisément détectable par les moyens de synchronisation. De même, les problèmes de bruits et de brouillages ne sont cruciaux que lorsqu'ils sont bien supérieurs à cette enveloppe.

Chacune de ces porteuses de référence, de position et de valeur connues du récepteur, est analysée, de façon à détecter les différences entre les fréquences émises et la position du banc de filtre du récepteur.

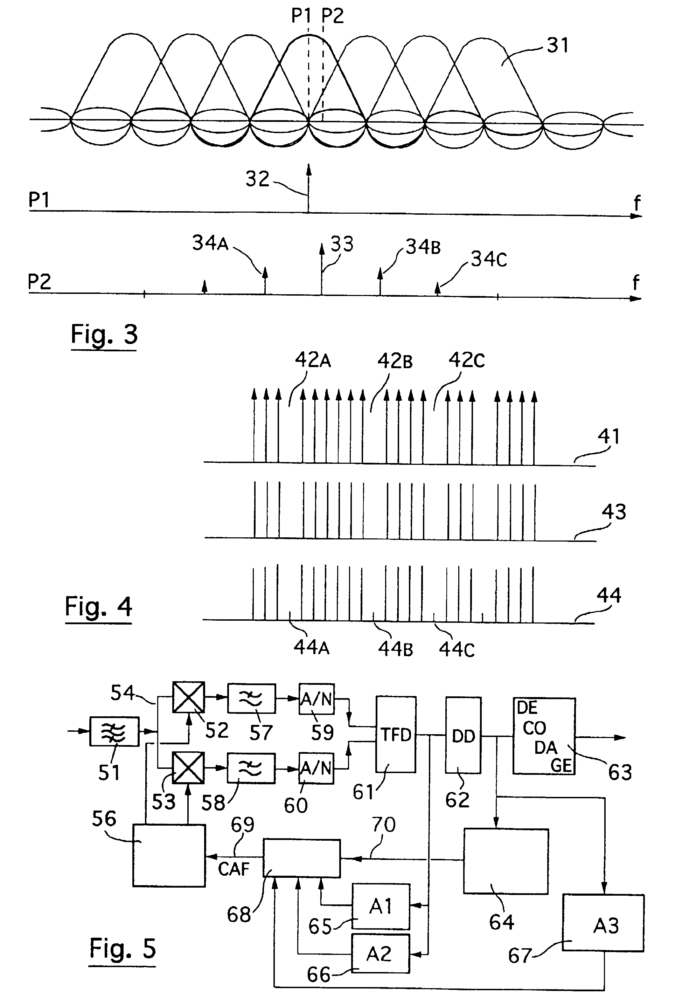

Ainsi que cela est représenté en figure 3, on applique une transformée de Fourier à N points sur le symbole, puis on prend le module des N points du vecteur résultant. Le décalage de la position des pics de corrélation dans ce vecteur par rapport à la position des références, est une mesure directe de l'écart δf, que l'on prend en compte dans l'ajustement de l'oscillateur local.

Si une porteuse de référence se trouve parfaitement accordé avec le banc de filtres 31 réalisé par la transformée de Fourier, elle se trouvera en position P1. Le module du résultat de cette transformée de Fourier présentera alors un pic unique 32.

En revanche, dans le cas d'un écart de fréquence, la porteuse de référence se trouve en position P2, décalée par rapport au banc de filtres. Le module du résultat de la transformée de Fourier comprend dans ce cas un pic principal 33 atténué, et une série d'autres pics $34_A$, $34_B$, $34_C$,..., apparaissant sur les autres positions du filtre.

De façon avantageuse, l'espacement entre les fréquences de référence n'est pas constant. L'objectif est, dans le cas d'un écho simple, provoqué par l'interférence de deux ou d'un faible nombre de trajets, de choisir les porteuses de façon à éviter qu'elles se trouvent simultanément affectées par un phénomène d'évanouissement (fading). On sait en effet qu'un écho simple entraîne un évanouissement se traduisant par un affaiblissement périodique dans le domaine fréquentiel. Dans certaines circonstances, il pourrait donc y avoir coïncidence entre ces porteuses et ces évanouissements.

L'invention prévoit, pour faire face à ce risque, de choisir plusieurs fréquences de référence, et de les répartir dans le domaine fréquentiel de la manière la plus apériodique possible. En d'autres termes, il est proposé de choisir au moins trois fréquences telles que les deux écarts consécutifs présentent dans le domaine fréquentiel un PGCD le plus faible possible.

Ce mode de réalisation permet de répondre au cas fréquent des échos simples.

Ces fréquences de références peuvent être porteuses d'information, c'est à dire être modulées par des éléments numériques utiles, ou non modulées.

Dans le cas où les fréquences de référence ne sont pas modulées, celles-ci sont choisies de telle façon que l'enveloppe résultante du motif de synchronisation soit sensiblement constante. Cela permet de ne pas perturber la détection de ce symbole, lors de la synchronisation trame.

Une telle enveloppe constante peut notamment être obtenue en répartissant les phases de chacune des porteuses de référence à l'origine selon une loi de distribution quadratique.

Le second moyen de réalisation d'un motif de synchronisation fréquentielle selon l'invention est la suppression de certaines porteuses, dans certains symboles de la trame.

Le même type d'analyse est appliqué, et la position des fréquences supprimées, ou trous, donne une mesure directe de l'écart de fréquence δf.

La figure 4 présente les résultats de la transformée de Fourier d'un tel motif de synchronisation. Le spectre 41 des raies émises comporte des trous $42_A$, $42_B$, $42_C$, que l'on retrouve de façon identique dans le module 43 de la TFD, dans le cas de l'accord parfait des fréquences.

En revanche, lorsque l'écart de fréquence δf est non nul, il apparaît dans le module 44 de la TFD, des trous non nuls $44_A$, $44_B$, $44_C$... De plus les autres pics ont des niveaux altérés et variables.

Pour ces deux procédés, une analyse des modules de la TFD permet de corriger l'accord du CAF.

Une intégration dans le temps de l'observation permettra de s'affranchir de configurations défavorables de la réponse du canal, et de diminuer l'effet du bruit de transmission. Cette intégration consiste par exemple à prendre en compte plusieurs résultats de localisation des motifs de synchronisation consécutifs ou non. On peut ainsi calculer une moyenne glissante de ces localisations, avec éventuellement une pondération sélective des localisations de façon à valoriser plus particulièrement les plus récentes.

Un autre mode de réalisation d'un motif de synchronisation fréquentielle est l'utilisation d'un mot de données codées, modulé et transmis de la même manière que les données utiles du signal. Il peut être insérer à la fréquence symbole, ou à une fréquence plus faible.

Le récepteur, après démodulation, effectue une opération de corrélation au niveau binaire, et non au niveau des formes d'ondes comme dans les modes de réalisation précédents, pour détecter le décalage éventuel du peigne de démodulation. Le résultat de cette opération constitue le signal d'aide à l'acquisition du CAF.

L'analyse sur la répartition des fréquences porteuses de référence est également valable pour la répartition des fréquences supprimées et des mots de données codées.

A l'aide de ces trois types de motif de synchronisation, l'opération proprement dite d'acquisition du CAF peut être effectuée de deux manières. Il est en effet possible d'agir sur l'oscillateur local soit de façon à le ramener à la position nominale correspondant à la fréquence du signal émis, soit de façon à l'accrocher sur le peigne de fréquence le plus proche de sa fréquence d'oscillation propre. Dans ce dernier cas, le récepteur connait le décalage en nombre de points à la sortie de la transformée de Fourier, qu'il prend en compte dans les procédures de décodage.

La figure 5 présente un schéma synoptique d'un récepteur exploitant les trois types de motifs de synchronisation fréquentielle selon l'invention.

De façon classique, ce récepteur comprend un filtre 51 passe-bande, deux multiplieurs 52 et 53, réalisant les produits du signal reçu 54 par les signaux en quadrature de phase générés par l'oscillateur local 56. Ces signaux sont ensuite filtrés (57,58), puis numérisés par des convertisseurs analogique/numérique 59,60. On réalise ensuite une transformation de Fourier Discrète 61, suivie d'une démodulation différentielle 62 et d'un décodage 63.

De façon connue, le verrouillage de l'oscillateur local 56 est réalisé par le module de verrouillage 64, par une mise à la puissance 4 (dans le cas d'une modulation à 4 états de phase) et une intégration du signal démodulé.

Selon l'invention, un module 65 d'analyse du motif de synchronisation fréquentielle constitué de porteuses de référence, et un module 66 d'analyse du motif de synchronisation fréquentielle constitué de porteuses supprimées reçoivent les données produites par la transformée de Fourier 61.

Un module 67 de corrélation numérique effectue l'analyse du motif de synchronisation constitué de mot de données, à partir des données démodulées.

Un module 68 de recombinaison et de moyennage génère le CAF 69, à partir du signal de verrouillage 70 et des informations issues des modules d'analyse 65, 66 et 67.

De façon évidente, la mise en oeuvre de ces différents procédés est optionnelle dans chacun des récepteurs. Un récepteur peut en effet fonctionner sans moyen d'analyse de ces motifs de synchronisation fréquentielle, ou avec un seul type de motif, ou toute combinaison possible.

**Revendications**

1. Procédé de diffusion de données numériques vers des récepteurs, notamment pour la radiodiffusion à haut débit vers des récepteurs mobiles, du type comprenant les étapes suivantes :

   - codage desdites données numériques délivrant une série d'éléments numériques ;
   - entrelacement temps-fréquence desdits éléments numériques, de façon à les répartir dans l'espace fréquence f- temps t ;
   - modulation de chacune desdites fréquences porteuses d'un multiplex de fréquences porteuses orthogonales par un jeu desdits éléments numériques, de façon à former des symboles successifs ; et
   - émission d'un signal formé par ledit multiplex de fréquences porteuses,

   caractérisé en ce que ledit procédé assure l'émission d'au moins un motif de synchronisation fréquentielle, récurrent dans le temps, ledit motif étant réparti sur au moins deux desdites porteuses, de façon que, dans lesdits récepteurs, on réalise les étapes suivantes :

   - réception dudit multiplex de fréquences porteuses ;
   - extraction et analyse (65, 66, 67) dudit motif de synchronisation fréquentielle, afin notamment de détecter un éventuel décalage entre la position dudit motif de synchronisation extrait et un motif de référence, connu dudit récepteur ;
   - délivrance d'un signal de CAF (69), généré en tenant compte de ladite analyse dudit motif de synchronisation fréquentielle.

**2.** Procédé selon la revendication 1, applicable dans le cas où chacune desdites trames comprend un symbole de silence de synchronisation analogique, caractérisé en ce que ledit symbole de silence comporte au moins deux porteuses de référence (32), constituant ledit motif de synchronisation fréquentielle.

**3.** Procédé selon la revendication 2, applicable dans le cas où ledit motif comprend au moins trois porteuses de référence (32), caractérisé en ce que l'écart entre lesdites porteuses de référence (32) n'est pas constant.

**4.** Procédé selon l'une quelconque des revendications 2 ou 3, caractérisé en ce que lesdites porteuses de référence (32) sont modulées par certains desdits éléments numériques.

**5.** Procédé selon l'une quelconque des revendications 2 ou 3, caractérisé en ce que la phase à l'origine de chacune desdites porteuses de référence (32) est choisie de façon que l'enveloppe résultante dudit motif de synchronisation fréquentielle soit sensiblement constante.

**6.** Procédé selon la revendication 5, caractérisé en ce que la suite desdites phases de chacune desdites porteuses de référence (32) à l'origine suit une loi de distribution quadratique.

**7.** Procédé selon la revendication 1, caractérisé en ce que ledit motif de synchronisation fréquentielle est constitué par la suppression d'au moins deux desdites fréquences porteuses ($42_A$ $42_B$, $42_C$), dans au moins un desdits symboles.

**8.** Procédé selon la revendication 7, applicable dans le cas où ledit motif comprend aux moins trois porteuses supprimées ($42_A$, $42_B$, $42_C$), caractérisé en ce que l'écart entre lesdites porteuses supprimées ($42_A$, $42_B$, $42_C$), n'est pas constant.

**9.** Procédé selon la revendication 1, caractérisé en ce que ledit motif de synchronisation fréquentielle est un mot de service, connu du récepteur, modulant au moins deux fréquences porteuses choisies dans le domaine fréquentiel, dans au moins certains symboles de ladite trame.

**10.** Procédé selon la revendication 9, caractérisé en ce que lesdits mots de service sont insérés au signal à la fréquence symbole, ou à une fréquence plus faible.

**11.** Procédé selon la revendication 9 ou 10, applicable dans le cas où ledit mot de service est codé sur au moins trois porteuses, caractérisé en ce que l'écart entre lesdites porteuses n'est pas constant.

**12.** Procédé selon la revendication 1, caractérisé en ce que ledit motif de synchronisation fréquentielle est constitué d'une combinaison d'au moins deux des modes de réalisation appartenant au groupe comprenant :

- insertion dans un symbole de silence d'au moins deux porteuses de référence (32) ;
- suppression d'au moins deux desdites fréquences porteuses ($42_A$ $42_B$, $42_C$), dans au moins un desdits symboles ;
- insertion d'un mot de service, connu du récepteur, modulant au moins deux fréquences porteuses choisies dans le domaine fréquentiel, dans au moins certains symboles de ladite trame.

**13.** Récepteur d'un signal numérique formé d'un multiplex de fréquences orthogonales modulées chacune par des éléments numériques, lesdits éléments numériques correspondant au codage de données numériques et étant entrelacés en temps et en fréquence,
récepteur du type comprenant :

- des moyens (51, 52, 53) de réception et de démodulation dudit signal numérique ;
- des moyens (59, 60) d'échantillonnage selon l'axe temporel dudit signal numérique, délivrant des échantillons numériques ;
- des moyens (61) de transformation mathématique desdits échantillons numériques, assurant un échantillonnage selon l'axe fréquentiel et délivrant un signal transformé,

dispositif caractérisé en ce qu'il connaît la structure d'au moins un motif de synchronisation fréquentielle régulièrement émis dans ledit signal numérique, ledit motif étant réparti sur au moins deux desdites porteuses, et
en ce qu'il comprend des moyens (61, 65, 67) de localisation dans ledit signal transformé et d'analyse desdits motifs de synchronisation fréquentielle, afin notamment de détecter un éventuel décalage entre la position dudit motif de synchronisation localisé et un motif de référence, connu dudit récepteur, lesdits moyens d'analyse générant au moins un signal (69) de commande automatique de fréquence contrôlant l'oscillateur local (56).

**14.** Récepteur selon la revendication 13, caractérisé en ce que lesdits moyens (61, 65, 67) de localisation et d'analyse ajustent ledit oscillateur local (56) soit sur la fréquence du signal émis (51), soit de façon à accrocher le peigne de fréquence le plus proche de la fréquence d'oscillation dudit oscillateur local (56).

15. Récepteur selon l'une quelconque des revendications 13 et 14, caractérisé en ce qu'il comprend des moyens (61, 65, 67) de localisation et d'analyse d'au moins deux motifs de synchronisation fréquentielle distincts, et des moyens (68) de recombinaison et de moyennage des signaux de commande automatique de fréquence correspondant à chacun desdits motifs de synchronisation fréquentielle.

**Patentansprüche**

1. Verfahren zum Aussenden von digitalen Daten, insbesondere für Hörfunksendungen mit hohem Datenfluß zu mobilen Empfängern, mit folgenden Schritten:

    - Kodierung der digitalen Daten, die eine Reihe digitaler Elemente liefert;
    - Zeit-Frequenz-Verschachtelung dieser digitalen Elemente, um sie über den Frequenz f - Zeit t - Raum zu verteilen;
    - Modulation einer jeden Trägerfrequenz eines Multiplexes orthogonaler Trägerfrequenzen durch einen Satz dieser digitalen Elemente, um aufeinanderfolgende Symbole zu bilden; und
    - Senden eines Signals, das durch dieses Multiplex von Trägerfrequenzen gebildet wird,

    dadurch gekennzeichnet, daß das Verfahren die Übertragung mindestens eines zeitrekurrenten, frequenzsynchronisierenden Motivs sicherstellt, wobei das Motiv über mindestens zwei dieser Trägerfrequenzen verteilt ist,
    so daß die folgenden Schritte in den Empfängern durchgeführt werden:

    - Empfang des Trägerfrequenzmultiplexes;
    - Extraktion und Analyse (65, 66, 67) des Motivs der Frequenzsynchronisierung, insbesondere um eine mögliche Verschiebung zwischen der Position dieses extrahierten Synchronisierungsmotivs und ein vom Empfänger bekanntes Referenzmotiv zu erfassen;
    - Abgabe eines CAF-Signals (69), das unter Beachtung der Analyse des Frequenzsynchronisierungsmotivs erzeugt wird.

2. Verfahren gemäß Anspruch 1, anwendbar für den Fall, daß jede Symbolfolge ein Leerzeichen für die analoge Synchronisierung umfaßt,
dadurch gekennzeichnet, daß das Leerzeichen mindestens zwei Referenzträgerfrequenzen (32) umfaßt, die das frequenzsynchronisierende Motiv bilden.

3. Verfahren gemäß Anspruch 2,
anwendbar, wenn das Motiv mindestens drei Referenzträgerfrequenzen (32) umfaßt,
dadurch gekennzeichnet, daß der Abstand zwischen den Referenzträgerfrequenzen (32) nicht konstant ist.

4. Verfahren gemäß einem der Ansprüche 2 oder 3,
dadurch gekennzeichnet, daß die Referenzträgerfrequenzen (32) durch einige der digitalen Elemente moduliert werden.

5. Verfahren gemäß einem der Ansprüche 2 oder 3,
dadurch gekennzeichnet, daß die Ursprungsphase für jede der Referenzträgerfrequenzen (32) so gewählt wird, daß die Umhüllende, die sich aus dem frequenzsynchronisierenden Motiv ergibt, in etwa konstant ist.

6. Verfahren gemäß Anspruch 5,
dadurch gekennzeichnet, daß die Phasenfolge einer jeden Referenzträgerfrequenz (32) ursprünglich einem quadratischen Verteilungsgesetz folgt.

7. Verfahren gemäß Anspruch 1,
dadurch gekennzeichnet, daß das frequenzsynchronisierende Motiv durch die Unterdrückung von mindestens zwei der Trägerfrequenzen ($42_A$, $42_B$, $42_C$) in mindestens einem der Zeichen gebildet wird.

8. Verfahren gemäß Anspruch 7, anwendbar, wenn das Motiv mindestens drei unterdrückte Trägerfrequenzen ($42_A$, $42_B$, $42_C$) umfaßt,
dadurch gekennzeichnet, daß der Abstand zwischen den unterdrückten Trägerfrequenzen ($42_A$, $42_B$, $42_C$) nicht konstant ist.

9. Verfahren gemäß Anspruch 1,
dadurch gekennzeichnet, daß das frequenzsynchronisierende Motiv ein vom Empfänger bekanntes Dienstwort ist, das mindestens zwei aus dem Frequenzbereich ausgewählte Trägerfrequenzen in mindestens einigen Symbolen der Folge moduliert.

10. Verfahren gemäß Anspruch 9,
dadurch gekennzeichnet, daß die Dienstworte beim Signal der Symbolfrequenz oder einer schwächeren Frequenz eingefügt werden.

11. Verfahren gemäß Anspruch 9 oder 10, anwendbar wenn das Dienstwort über mindestens drei Trägerfrequenzen kodiert ist,
dadurch gekennzeichnet, daß der Abstand zwischen den Trägerfrequenzen nicht konstant ist.

12. Verfahren gemäß Anspruch 1,

dadurch gekennzeichnet, daß das Frequenzsynchronisierungsmotiv aus einer Verbindung mindestens zweier Ausführungen aus der Gruppe besteht, die folgendes umfaßt:

- Einfügen von mindestens zwei Referenzträgerfrequenzen (32) in ein Leerzeichen;
- Eliminierung von mindestens zwei dieser Trägerfrequenzen (42$_A$, 42$_B$, 42$_C$) in mindestens einem dieser Leerzeichen;
- Einfügen eines dem Empfänger bekannten Dienstwortes, das mindestens zwei aus dem Frequenzbereich gewählte Trägerfrequenzen in mindestens einigen Symbolen dieser Folge moduliert.

13. Empfänger eines Digitalsignals, bestehend aus einem Multiplex orthogonaler Frequenzen, die jeweils durch Digitalelemente moduliert werden, wobei die Digitalelemente der Kodierung digitaler Daten entsprechen und zeit- und frequenzverschachtelt sind, wobei der Empfänger enthält:

- Mittel (51, 52, 53) für den Empfang und die Demodulierung des digitalen Signals;
- Mittel (59, 60) für die Abtastung nach der Zeitachse des digitalen Signals, welche digitale Abtastwerte liefern;
- Mittel (61) für die mathematische Transformation der digitalen Abtastwerte, die eine Abtastung nach der Frequenzachse sicherstellen und ein transformiertes Signal liefern;

wobei der Empfänger dadurch gekennzeichnet ist, daß er die Struktur mindestens eines frequenzsynchronisierenden Motivs kennt, das im digitalen Signal regelmäßig gesendet wird und, daß er Mittel (61, 65, 67) zur örtlichen Festlegung im transformierten Signal sowie zur Analyse der frequenzsynchronisierenden Motive umfaßt, um insbesondere eine mögliche Abweichung zwischen der Position des lokalisierten Synchronisationsmotivs und einem im Empfänger bekannten Referenzmotiv zu erkennen, wobei die Analysemittel mindestens ein Signal (69) für die automatische Steuerung der Frequenz erzeugen, welche den örtlichen Schwingkreis (56) steuert.

14. Empfänger gemäß Anspruch 13, dadurch gekennzeichnet, daß die Mittel (61, 65, 67) zur örtlichen Festlegung und Analyse den örtlichen Schwingkreis (56) entweder auf die Frequenz des gesendeten Signals (51) einstellen oder aber ihn derart einstellen, daß sie den Frequenzkamm festhalten, welcher der Schwingungsfrequenz des örtlichen Schwingkreises (56) am nächsten liegt.

15. Empfänger gemäß einem der Ansprüche 13 oder 14, dadurch gekennzeichnet, daß er über Mittel (61, 65, 67) zur örtlichen Festlegung und Analyse von mindestens zwei verschiedenen frequenzsynchronisierenden Motiven verfügt sowie über Mittel (68) zur Rekombination und Mittelwertbildung automatischer Frequenzsteuersignale, die jedem dieser frequenzsynchronisierenden Motive entsprechen.

## Claims

1. Method of broadcasting digital data to receivers, especially for radio broadcasting at high bit rate to mobile receivers, of the type comprising the following steps:

- coding of the said digital data yielding a series of digital elements;
- time/frequency interlacing of the said digital elements, so as to distribute them in frequency f/ time t space;
- modulation of each of the said carrier frequencies of a multiplex of orthogonal carrier frequencies by a set of the said digital elements, so as to form successive symbols; and
- transmission of a signal formed by the said multiplex of carrier frequencies,

characterized in that the said method provides for the transmission of at least one time-recurring frequency synchronization pattern, the said pattern being distributed over at least two of the said carriers,

in such a way that, in the said receivers, the following steps are carried out:

- reception of the said multiplex of carrier frequencies;
- extraction and analysis (65, 66, 67) of the said frequency synchronization pattern, so as in particular to detect any shift between the position of the said extracted synchronization pattern and a reference pattern, known to the said receiver;
- delivery of a CAF signal (69), generated by taking account of the said analysis of the said frequency synchronization pattern.

2. Method according to Claim 1, applicable in the case where each of the said frames comprises an analog synchronization silence symbol, characterized in that the said silence symbol includes at least two reference carriers (32), constituting the said frequency synchronization pattern.

3. Method according to Claim 2, applicable in the case where the said pattern comprises at least three reference carriers (32), characterized in that the gap between the said reference carriers (32) is not constant.

4. Method according to either one of Claims 2 or 3, characterized in that the said reference carriers (32) are modulated by some of the said digital elements.

5. Method according to either one of Claims 2 or 3, characterized in that the phase at the origin of each of the said reference carriers (32) is chosen such that the resulting envelope of the said frequency synchronization pattern is substantially constant.

6. Method according to Claim 5, characterized in that the sequence of the said phases of each of the said reference carriers (32) at the origin follows a quadratic distribution law.

7. Method according to Claim 1, characterized in that the said frequency synchronization pattern is constructed by suppressing at least two of the said carrier frequencies ($42_A$, $42_B$, $42_C$), in at least one of the said symbols.

8. Method according to Claim 7, applicable in the case where the said pattern comprises at least three suppressed carriers ($42_A$, $42_B$, $42_C$), characterized in that the gap between the said suppressed carriers ($42_A$, $42_B$, $42_C$), is not constant.

9. Method according to Claim 1, characterized in that the said frequency synchronization pattern is a service word, known to the receiver, modulating at least two carrier frequencies chosen from the frequency domain, in at least some symbols of the said frame.

10. Method according to Claim 9, characterized in that the said service words are inserted into the signal at the symbol frequency or at a lower frequency.

11. Method according to Claim 9 or 10, applicable in the case where the said service word is coded on at least three carriers, characterized in that the gap between the said carriers is not constant.

12. Method according to Claim 1, characterized in that the said frequency synchronization pattern consists of a combination of at least two of the modes of construction belonging to the group comprising:

- insertion into a silence symbol of at least two reference carriers (32);
- suppression of at least two of the said carrier frequencies ($42_A$, $42_B$, $42_C$), in at least one of the said symbols;

- insertion of a service word, known to the receiver, modulating at least two carrier frequencies chosen from the frequency domain, into at least some of the symbols of the said frame.

13. Receiver of a digital signal formed of a multiplex of orthogonal frequencies each modulated by digital elements, the said digital elements corresponding to the coding of digital data and being interlaced in time and in frequency,
a receiver of the type comprising:

- means (51, 52, 53) of reception and demodulation of the said digital signal;
- means (59, 60) of sampling along the time axis of the said digital signal, yielding digital samples;
- means (61) of mathematical transformation of the said digital samples, providing for sampling along the frequency axis and yielding a transformed signal,

a device characterized in that it knows the structure of at least one frequency synchronization pattern transmitted regularly in the said digital signal, the said pattern being distributed over at least two of the said carriers and
in that it comprises means (61, 65, 67) of location within the said transformed signal and of analysis of the said frequency synchronization patterns, so as in particular to detect any shift between the position of the said located synchronization pattern and a reference pattern, known to the said receiver, the said means of analysis generating at least one automatic frequency control signal (69) controlling the local oscillator (56).

14. Receiver according to Claim 13, characterized in that the said means (61, 65, 67) of location and analysis adjust the said local oscillator (56) either to the frequency of the transmitted signal (51), or in such a way as to lock onto the frequency comb closest to the frequency of oscillation of the said local oscillator (56).

15. Receiver according to either one of Claims 13 and 14, characterized in that it comprises means (61, 65, 67) of location and analysis of at least two distinct frequency synchronization patterns, and means (68) of recombining and averaging the automatic frequency control signals corresponding to each of the said frequency synchronization patterns.

Fig. 1

Fig. 2

Fig. 3

Fig. 4

Fig. 5